Europäisches Patentamt

European Patent Office

Office européen des brevets

(19)

(11) Numéro de publication: **0 159 231 B1**

## FASCICULE DE BREVET EUROPEEN

(45) Date de publication du fascicule du brevet:
08.02.89

(51) Int. Cl.⁴: **A 23 J 3/00, A 23 J 1/06**

(21) Numéro de dépôt: 85400502.2

(22) Date de dépôt: 15.03.85

(54) Procédé de décoloration de substances colorées par des composés tétrapyrroliques et produits obtenus.

(30) Priorité: 15.03.84 FR 8404004

(43) Date de publication de la demande:
23.10.85 Bulletin 85/43

(45) Mention de la délivrance du brevet:
08.02.89 Bulletin 89/6

(84) Etats contractants désignés:
AT BE CH DE GB IT LI LU NL SE

(56) Documents cités:
FR-A-1 330 710

CHEMICAL ABSTRACTS, vol. 75, no. 4, 26 juillet 1971, page 485, no. 27563w, Columbus, Ohio, US; R. KAPLER et al.: "Infrared absorption spectra of chlorophyll a and b, adsorbed on aluminum oxide" & ZH. FIZ. KHIM. 1971, 45(4), 750-3
CHEMICAL ABSTRACTS, vol. 66, no. 2, 9 janvier 1967, page 596, no. 5966s, Columbus, Ohio, US; A.N. GRIGORYAN et al.: "Reversible color change of chlorophyll and pheophytin during their adsorption on magnesium oxide" & VESTN. MOSK. UNIV., SER. II, KHIM. 21(3), 42-4(1966)

(73) Titulaire: Etablissements Public dit: UNIVERSITE DES SCIENCES ET TECHNIQUES (LILLE I), Domaine Universitaire Scientifique, F-59655 Villeneuve d'Ascq Cédex (FR)
Titulaire: Etablissement Public dit: CENTRE NATIONAL DE LA RECHERCHE SCIENTIFIQUE (CNRS), 15, Quai Anatole France, F-75007 Paris (FR)

(72) Inventeur: Plot, Jean-Marie, 5, avenue du Vieux Chateau, F-59650 Villeneuve D'asço (FR)
Inventeur: Guillochon, Didier, 70, Allée Chantecler, F-59650 Villeneuve D'asço (FR)
Inventeur: Charet, Pierre, 10, rue Bouret, F-59700 Marcq En Baroeul (FR)
Inventeur: Thomas, Daniel, 33, Allée de l'Etang Domaine de Rimberlieu, F-60150 Villeres Sur Coudun (FR)

(74) Mandataire: Nony, Michel, Cabinet Nony 29, rue Cambacérès, F-75008 Paris (FR)

## Description

La présente invention a pour objet un procédé de décoloration de substances colorées par des composés tétrapyrroliques, tels que des porphyrines ou des métallo-porphyrines, issus de composés animaux ou végétaux, y compris ceux qui sont obtenus par des procédés microbiologiques. L'invention a aussi pour objet les produits décolorés obtenus par ce procédé.

On sait que de nombreuses substances biologiques, ainsi que des fractions ou dérivés de ces substances, sont fortement colorés par des composés de structure tétrapyrrolique comme par exemple l'hème ou les chlorophylles. Ces composés sont des molécules complexes formées de quatre noyaux pyrroliques substitués sur les carbones bêta et qui sont unis entre eux, par les carbones alpha, par l'intermédiaire de radicaux méthènyles-CH=.

Les substituants portés par les carbones bêta des pyrroles sont notamment des groupements méthyle, vinyle, propionyle (éventuellement estérifiés) ou formyle. De plus, dans les chlorophylles, un groupement méthènyle est relié au carbone bêta d'un pyrrole voisin pour former un cycle cyclopentanone.

En outre, dans l'hémoglobine et ses dérivés, un atome de fer est lié aux quatre azotes des pyrroles. De même, les chlorophylles contiennent un atome de magnésium lié aux quatre azotes pyrroliques.

La présence de ces composés fortement colorés est souvent indésirable dans de nombreux produits d'origine animale ou végétale, et la décoloration satisfaisante de ces produits est difficile.

Dans ce qui suit, on va exposer plus particulièrement les problèmes posés par la décoloration des dérivés du sang, mais il est bien connu des spécialistes que des problèmes analogue se posent pour décolorer des substances contenant d'autres colorants tétrapyrroliques, tels que par exemple les chlorophylles ou leurs dérivés.

On sait que la préparation et la purification des dérivés du sang posent des problèmes de décoloration difficiles à résoudre. En effet, la plupart des dérivés sanguins sont fortement colorés par l'hémoglobine, même si celle-ci est présente en faible quantité.

On sait aussi que les globules rouges du sang sont susceptibles de constituer une source importante de protéines dont on ne récupère actuellement qu'une faible partie, principalement pour l'alimentation animale ou humaine, le reste étant rejeté comme produit de rebut.

Ce rejet d'une partie importante des produits sanguins obtenus dans les abattoirs constitue non seulement un gaspillage de protéines de très bonne qualité, mais aussi une source de pollution importante.

On sait que l'hémoglobine représente les deux tiers des protéines du sang et que son pouvoir colorant est si intense qu'il rend très difficile l'utilisation du sang dans l'alimentation, si l'on excepte l'utilisation traditionnelle dans la fabrication des boudins.

Le sang destiné à l'utilisation en alimentation humaine est généralement centrifugé de façon à séparer le plasma (composé de protéines incolores) du cruor, qui est le résidu cellulaire solide constitué à près de 95% d'hémoglobine. Alors que le plasma est utilisé notamment dans les industries de salaison et de conserve de viandes, la quasi totalité du cruor est rejetée à titre de déchet.

Les problèmes de coloration des produits du sang sont dus au fait que la molécule d'hémoglobine comporte des groupements prosthétiques appelés hèmes qui sont des molécules complexes fortement colorées formées de quatre noyaux hétérocycliques azotés liés à un atome de fer. Pour obtenir des dérivés du sang non colorés, il convient donc de séparer les molécules d'hème du reste de la molécule (globine).

Toutefois, il est bien connu que la liaison hème-globine est relativement forte. Pour rompre cette liaison, on utilise généralement de l'acétone contenant de l'acide chlorhydrique. L'hème libéré se dissout dans l'acétone tandis que la protéine décolorée précipite; voir par exemple: LEWIS, U.J.; J. Biol. chem. 206, 109 (1954).

Toutefois, la décoloration de l'hémoglobine par l'acétone est difficilement exploitable industriellement. En effet, les volumes d'acétone nécessaires à la décoloration complète sont très importants, de l'ordre de 10 volumes d'acétone pour 1 volume de sang, et cela oblige à recycler le solvant organique. En outre, l'utilisation de volumes importants d'acétone pose des problèmes de sécurité.

On a également proposé de décolorer l'hémoglobine à l'aide de diverses transformations chimiques telles que l'oxydation par l'eau oxygénée. Cette méthode présente divers inconvénients, car elle entraîne des modifications chimiques des protéines par oxydation, et la formation de produits insolubles.

Une autre méthode de décoloration consiste à effectuer une hydrolyse enzymatique de l'hémoglobine avec production de deux sortes de peptides: des peptides héminiques (colorés) et des peptides non-héminiques (incolores). On sépare ensuite les peptides incolores par ultra-filtration, gel-filtration ou adsorption sur du charbon actif; voir par exemple le brevet français n° 79 02940 (2 415 968) et l'article de Jean REGNIER, R.T.V.A., Novembre 1983, pages 29–35.

Toutefois, les techniques de décoloration fondées sur l'hydrolyse de l'hémoglobine utilisées jusqu'à présent ne permettent pas d'obtenir une décoloration suffisante pour certaines applications, et entraînent une perte importante de peptides.

Le procédé de l'invention a notamment pour but de remédier à ces inconvénients.

Le procédé de l'invention est fondé sur les techniques d'adsorption. Il présente l'avantage d'utiliser un adsorbant peu onéreux et facilement régénérable, contrairement à d'autres adsorbants tels que le charbon actif.

C'est un procédé peu polluant qui peut être mis en œuvre en utilisant (outre l'agent adsorbant) de l'eau, de l'acide chlorhydrique et de la soude. Il évite en outre la mise en œuvre de techniques compliquées ou coûteuses, telles que l'ultra-filtration.

La présente invention a pour objet un procédé de décoloration d'une solution aqueuse de substances colorées par des composés tétrapyrroliques, caractérisé par le fait que l'on met en contact ladite solution aqueuse avec au moins un agent adsorbant choisi dans le groupe constitué par l'alumine, la magnésie et le silicate de magnésium, et que l'on recueille la solution décolorée obtenue.

On a en effet découvert que, de façon surprenante, ces trois agents adsorbants permettent de résoudre efficacement les problèmes de décoloration des substances contenant des colorants tétrapyrroliques, contrairement à de nombreux autres agents adsorbants usuels.

La présente invention a en particulier pour objet un procédé de décoloration d'une solution aqueuse de dérivés du sang colorés par de l'hémoglobine ou par d'autres composés héminiques, caractérisé par le fait que l'on met en contact ladite solution aqueuse avec au moins un agent adsorbant choisi dans le groupe constitué par l'alumine, la magnésie et le silicate de magnésium, et que l'on recueille la solution décolorée obtenue.

Les composés héminiques sont par exemples ceux obtenus après hydrolyse partielle ou totale de l'hémoglobine.

Le produit de départ est obtenu par exemple à partir du sang provenant d'abattoirs. Généralement, le sang est maintenu à l'état fluide par addition d'un agent anti-coagulant classique tel que le citrate de sodium. Le plasma est alors séparé du cruor par centrifugation.

Le cruor est alors dilué à l'eau pour provoquer l'hémolyse, par choc osmotique, des globules rouges. On ajoute par exemple un volume d'eau pour un volume de cuor, puis on agite.

On obtient ainsi un hémolysat qui peut constituer le produit de départ du procédé de l'invention.

Lorsqu'on désire procéder d'abord à une hydrolyse de l'hémoglobine, par exemple sous l'action de protéases, on soumet de préférence l'hémolysat à des conditions permettant la dénaturation des protéines (selon les méthodes connues), par exemple par traitement à des pH extrémes ou encore par chauffage vers 85 °C. On sait en effet que la dénaturation des protéines favorise l'action des protéases.

Le produit de départ peut aussi être une solution d'extraction d'une substance végétale, colorée par de la chlorophylle.

Pour mettre en contact la solution à décolorer avec l'agent adsorbant, on peut soit les mélanger en agitant au moins périodiquement, soit faire passer la solution à travers une colonne contenant l'agent adsorbant. Quand on utilise la première de ces deux techniques, on sépare l'agent adsorbant, pour recueillir la solution décolorée, par décantation et/ou filtration. On peut répéter si nécessaire ces opérations. La quantité d'agent adsorbant et le temps de contact sont facilement déterminés par des expériences de routine.

Pour purifier le produit obtenu, on peut encore procéder, si nécessaire, à un dessalage selon les techniques usuelles.

Dans des modes d'exécution particuliers, le procédé de l'invention peut encore présenter les caractéristiques suivantes, prises isolément ou en combinaison:

— la solution aqueuse de départ a un pH acide compatible avec la solubilité de l'agent adsorbant; généralement le pH peut varier de 2 à 6;

— on effectue l'adsorbtion à une température de 0 à 60 °C; on opère généralement à température ambiante;

— le produit de départ est du sang hémolysé, un hémolysat sanguin préparé au départ de la fraction cellulaire obtenue après séparation du plasma, ou un produit d'hydrolyse d'un hémolysat sanguin;

— ledit produit d'hydrolyse est obtenu par exemple par hydrolyse à l'aide d'une enzyme, de préférence une enzyme digestive, choisie parmi la pepsine, la trypsine, la chymotrypsine, etc;

Dans le cas où la substance colorée est un composé héminique, et notamment dans le cas où le produit de départ est un produit d'hydrolyse d'un hémolysat sanguin, on utilise de préférence comme agents adsorbants l'alumine et/ou la magnésie, pour lesquelles on a observé une bonne sélectivité de l'adsorption des composés héminiques.

Quand le produit de départ est constitué principalement d'hémoglobine, ou d'un hydrolysat de celle-ci, le procédé de l'invention permet d'obtenir des protéines ou des peptides incolores: on ne peut déceler aucune absorption due à l'hème au voisinage de 400 nm. Après évaporation sous pression réduite, le produit décoloré se présente sous la forme d'une poudre blanche.

Ces produits peuvent être utilisés dans l'alimentation animale et aussi dans l'alimentation humaine, par exemple par incorporation dans les produits de charcuterie ou dans les potages fabriqués industriellement, etc. . . ou encore en diététique médicale, par incorporation dans des formules alimentaires diététiques, etc. . . Dans ces diverses application, les produits protéiques ou peptidiques obtenus présentent l'avantage d'une composition qui peut être considérée comme constante.

L'abrégé de Chemical abstracts vol. 75, No. 4, 26 juillet 1971, page 485, No. 27 563 w a pour objet l'étude des spectres d'absorption infrarouge des chlorophylles a et b adsorbées sur l'alumine au départ de leurs solutions benzéniques.

L'abrégé de Chemical Abstracts vol. 66, No. 2, 9 janvier 1967, page 596, No. 5966 s montre que pendant l'adsorption de la chlorophylle, à partir d'une solution dans l'éther éthylique su la magnésie, on observe une modification de couleur qui est probablement due à la formation de complexes avec l'éther éthylique à la surface de la magnésie.

Les deux articles cités n'ont donc pas pour objet la décoloration de solutions aqueuses contenant des substances tétrapyrroliques.

A plus forte raison, ces deux articles ne suggèrent pas qu'il est possible de décolorer de façon pratiquement totale de telles solutions avec un agent adsorbant choisi parmi ceux dont l'utilisation est revendiquée ici.

Le tableau I, qui figure à la page 7 de la description de la présente demande, montre bien que certains agents adsorbants ne retiennent qu'une partie de la substance colorante, et ne procurent donc pas une décoloration totale. La notion d'adsorption n'est donc pas nécessairement synonyme de la notion de rétention suffisamment complète du produit colorant pour permettre la décoloration totale.

L'obtention d'une décoloration totale n'est pas suggérée par les articles cités, et n'était donc pas évidente.

Les exemples suivants illustrent l'invention sans toutefois la limiter.

Exemple 1

On utilise comme produit de départ du sang bovin. Par centrifugation, on sépare le plasma et récupère le culot solide appelé cruor et composé essentiellement d'hémoglobine. On dilue le cruor par addition d'eau (un volume d'eau pour un volume de cruor) afin d'hémolyser les globules rouges.

On ajoute à l'hémolysat obtenu de l'acide chlorhydrique jusqu'à pH 2 afin de dénaturer l'hémoglobine. La solution obtenue est alors diluée avec de l'eau jusqu'à une concentration d'hémoglobine égale à 5% (poids/volume).

On fait incuber 200 ml de la solution obtenue pendant 2 heures à 37 °C et à pH 2 en présence de pepsine (7000 unités Anson par gramme d'hémoglobine). Pendant l'incubation, on maintient automatiquement la valeur du pH à 2.

Après incubation, on porte le pH à 3,5 par addition d'une solution de soude puis on centrifuge à 10 000 tours/min. pendant 15 minutes.

On fait passer le surnageant, qui est très coloré, à travers une colonne contenant 100 g d'alumine (Alumine basique 90, commercialisée par Merck & Co.), et recueille l'éluat.

L'éluat obtenu est incolore (absorbance dans la zone 390–410 nm inférieure à 0,02).

L'éluat est ensuite lyophilisé.

On obtient après lyophilisation une poudre blanche ayant la caractéristique suivante:
– poids: 2,2 g
– teneur pondérale en peptides: 85,5%

Exemple 2

Dans cet exemple on utilise comme produit de départ un hémolysat de sang bovin dénaturé à pH 2 et dilué jusqu'à une concentration finale en hémoglobine de 5%, comme à l'exemple 1.

On fait incuber 200 ml de cet hémolysat pendant 2 heures à 37 °C et à pH 2 en présence de 7000 unités Anson de pepsine par gramme d'hémoglobine.

On porte ensuite le pH à 8,5 par addition d'une solution aqueuse de soude. On ajoute de la trypsine, à raison de 7000 unités Anson par gramme d'hémoglobine et on laisse incuber pendant 2 heures à pH 8,5 et à 40 °C, en maintenant automatiquement le pH à la même valeur.

A la fin de cette seconde incubation, on ramène le pH à 3 par addition d'une solution aqueuse d'acide chlorhydrique, puis on centrifuge à 10 000 tours par minute pendant 15 minutes.

On fait alors passer le surnageant très coloré obtenu à travers une colonne d'alumine (Merck & Co.).

L'éluat obtenu ne présente pas d'absorbance dans la zone 390–410 nm et est totalement incolore (absorbance dans la zone 390–410 nm inférieure à 0,02).

Après lyophilisation de l'éluat, on obtient une poudre blanche présentant les caractéristiques suivantes:
– poids: 2 g
– teneur pondérale en peptides: 65%;

Exemple 3

Le produit de départ est comme précédemment un hémolysat dilué ayant une concentration en hémoglobine dénaturée égale à 5% (poids/vol.).

On fait incuber 13,5 litres de cet hémolysat pendant 2 heures 40 minutes à 37 °C et à pH égal à 2 en présence de 7000 unités Anson de pepsine par gramme d'hémoglobine. Pendant l'incubation, on maintient automatiquement un pH constant.

L'hydrolysat obtenu est ensuite centrifugé à 10 000 tours/min. pendant 15 minutes.

Le surnageant obtenu est beaucoup plus coloré que celui obtenu dans les exemples 1 et 2. On le mélange avec des quantités croissantes d'alumine, par opérations successives, et on agite le mélange pendant 15 heures au total. On centrifuge ensuite à 5000 tours/min. pendant 15 minutes et récupère le surnageant incolore. On rince plusieurs fois le culot d'alumine colorée avec de l'eau et on mélange les eaux de rinçage décolorées au surnageant précédent. Après lyophilisation, on obtient une poudre blanche présentant les caractéristiques suivantes:
– Produit incolore (absorbance inférieure à 0,02 dans la zone 390–410 nm.).
– Poids: 316 g
– Teneur pondérale en peptides: 83,1%.

Exemple 4

On utilise comme produit de départ l'hydrolysat obtenu à l'exemple 3 après le stade d'hydrolyse par la pepsine.

Cet hydrolysat est amené à un pH de 3,9 par addition d'une solution aqueuse de soude, puis est centrifugé à 10 000 tours/min. pendant 15 minutes.

Le surnageant très coloré est alors réparti en plusieurs fractions identiques qui sont chacune mélangées et agitées pendant 3 heures avec une même quantité de différents agents adsorbants.

Après la fin de cette étape d'adsorption, on centrifuge et l'on compare la densité optique des surnageants à 396 nm.

On évalue l'efficacité de la décoloration à l'aide de la formule suivante:

$$\text{Efficacité} = \frac{Ai-Ae}{Ai} \times 100$$

Ai représente l'absorbance de l'hydrolysat initial, et

Ae représente l'absorbance après le traitement d'adsorption.

Les résultats sont résumés dans le tableau 1 suivant:

Tableau 1

| Agents adsorbants | Al$_2$O$_3$ | Florisil* | MgO | Fe$_2$O$_3$ | CuO | MnO$_2$ | Fe$_3$O$_4$ | SiO$_2$ |
|---|---|---|---|---|---|---|---|---|
| Efficacité de la décoloration | 100 | 100 | 100 | 61 | 32 | 60 | 60 | 85 |

*Le Florisil (marque commerciale) est constitué de silicate de magnésium.

Il faut noter que, dans cette expérience, la quantité d'alumine (ou de Florisil, ou de magnésie) utilisée n'était pas la quantité minimum pour obtenir une efficacité de 100%, de sorte que les différences entre ces trois agents adsorbants et les autres sont encore plus importantes que ne le fait apparaître le Tableau 1.

Exemple 5

Dans cet exemple, on décolore le cruor sans hydrolyse ni dénaturation préalable de l'hémoglobine.

On prépare comme dans les exemples précédents un hémolysat contenant 5% d'hémoglobine, en omettant l'étape de dénaturation.

On amène le pH à 5 par addition d'une solution d'acide chlorhydrique.

On mélange alors l'hémolysat avec un mélange d'alumine et de magnésie 3:1 et agite le mélange pendant 6 heures.

Après centrifugation, on obtient un surnageant décoloré.

Revendications

1. Procédé de décoloration d'une solution aqueuse de substances colorées par des composés tétrapyrroliques, caractérisé par le fait que l'on met en contact ladite solution aqueuse avec au moins un agent adsorbant choisi dans le groupe constitué par l'alumine, la magnésie et le silicate de magnésium, et que l'on recueille la solution décolorée obtenue.

2. Procédé selon la revendication 1, caractérisé par le fait que le produit de départ est une solution aqueuse de dérivés du sang colorée par de l'hémoglobine ou par d'autres composés héminiques.

3. Procédé selon l'une quelconque des revendications précédentes, caractérisé par le fait que le produit de départ est du sang hémolysé.

4. Procédé selon l'une quelconque des revendications 1 à 3, caractérisé par le fait que le produit de départ est un hémolysat de la fraction cellulaire obtenue après séparation du plasma.

5. Procédé selon l'une quelconque des revendications 1 à 3, caractérisé par le fait que le produit de départ est un produit d'hydrolyse d'un hémolysat sanguin.

6. Procédé selon la revendication 5, caractérisé par le fait que le produit de départ est un produit d'hydrolyse enzymatique.

7. Procédé selon la revendication 6, caractérisé par le fait que ledit produit de départ est obtenu par hydrolyse à l'aide d'une enzyme choisie parmi la pepsine, la trypsine, et la chymotrypsine.

8. Procédé selon l'une quelconque des revendications 2 à 7, caractérisé par le fait que l'agent adsorbant est l'alumine et/ou la magnésie.

9. Procédé selon la revendication 1, caractérisé par le fait que le produit de départ est une solution d'extraction d'une substance végétale colorée par de la chlorophylle.

10. Procédé selon l'une quelconque des revendications précédentes, caractérisé par le fait que la solution aqueuse de départ a un pH de 2 à 6.

11. Procédé selon l'une quelconque des revendications précédentes, caractérisé par le fait que l'on effectue l'absorption à une température de 0 à 60 °C.

12. Produit décoloré obtenu selon le procédé tel que défini dans l'une quelconque des revendications précédentes.

13. Produit selon la revendication 12, caractérisé par le fait qu'il s'agit d'un produit protéique ou peptidique dérivé du sang.

Patentansprüche

1. Verfahren zum Entfärben einer wässrigen Lösung von Substanzen, die durch Tetrapyrrolverbindungen gefärbt sind, dadurch gekennzeichnet, dass man die wässrige Lösung mit mindestens einem Adsorptionsmittel, ausgewählt unter Aluminiumoxid, Magnesiumoxid und Magnesiumsilikat, in Kontakt bringt und die erhaltene entfärbte Lösung gewinnt.

2. Verfahren nach Anspruch 1, dadurch gekennzeichnet, dass das Ausgangsprodukt eine von Blut abgeleitete und durch Hämoglobin oder andere Häminverbindungen gefärbte wässrige Lösung ist.

3. Verfahren nach einem der vorhergehenden Ansprüche, dadurch gekennzeichnet, dass das Ausgangsprodukt hämolysiertes Blut ist.

4. Verfahren nach einem der Ansprüche 1 bis 3, dadurch gekennzeichnet, dass das Ausgangsprodukt ein Hämolysat der Zellfraktion ist, welche man nach Abtrennung des Plasmas erhält.

5. Verfahren nach einem der Ansprüche 1 bis 3, dadurch gekennzeichnet, dass das Ausgangsprodukt ein Hydrolyseprodukt eines Bluthämolysates ist.

6. Verfahren nach Anspruch 5, dadurch gekennzeichnet, dass das Ausgangsprodukt ein Produkt einer enzymatischen Hydrolyse ist.

7. Verfahren nach Anspruch 6, dadurch gekennzeichnet, dass man das Ausgangsprodukt durch Hydrolyse mit Hilfe eines Enzyms, ausgewählt unter Pepsin, Trypsin und Chymotrypsin, erhält.

8. Verfahren nach einem der Ansprüche 2 bis 7, dadurch gekennzeichnet, dass das Adsorptionsmittel Aluminium- und/oder Magnesiumoxid ist.

9. Verfahren nach Anspruch 1, dadurch gekennzeichnet, dass das Ausgangsprodukt eine Extraktionslösung einer durch Chlorophyll gefärbten pflanzlichen Substanz ist.

10. Verfahren nach einem der vorhergehenden Ansprüche, dadurch gekennzeichnet, dass die wässrige Ausgangslösung einen pH von 2 bis 6 hat.

11. Verfahren nach einem der vorhergehenden Ansprüche, dadurch gekennzeichnet, dass die Absorption bei einer Temperatur von 0 bis 60 °C durchgeführt wird.

12. Entfärbtes Produkt, erhalten nach einem in den vorhergehenden Ansprüchen definierten Verfahren.

13. Produkt nach Anspruch 12, dadurch gekennzeichnet, dass es sich um ein von Blut abgeleitetes Protein- oder Peptidprodukt handelt.

**Claims**

1. Process for the decolorization of an aqueous solution of substances which are coloured by tetrapyrrole compounds, characterized in that the said aqueous solution is brought into contact with at least one adsorbent agent chosen from the group consisting of alumina, magnesia and magnesium silicate, and in that the decolorized solution obtained is collected.

2. Process according to Claim 1, characterized in that the starting material is an aqueous solution of blood derivatives which is coloured by haemoglobin or by other haemin compounds.

3. Process according to either of the preceding claims, characterized in that the starting material is haemolysed blood.

4. Process according to any one of Claims 1 to 3, characterized in that the starting material is a haemolysate of the cellular fraction obtained after separation of the plasma.

5. Process according to any one of Claims 1 to 3, characterized in that the starting material is a product of hydrolysis of a blood haemolysate.

6. Process according to Claim 5, characterized in that the starting material is a product of enzymatic hydrolysis.

7. Process according to Claim 6, characterized in that the said starting material is obtained by hydrolysis by means of an enzyme chosen from pepsin, trypsin and chymotrypsin.

8. Process according to any one of Claims 2 to 7, characterized in that the adsorbent agent is alumina and/or magnesia.

9. Process according to Claim 1, characterized in that the starting material is an extraction solution of a plant substance which is coloured by chlorophyll.

10. Process according to any one of the preceding claims, characterized in that the starting aqueous solution has a pH of 2 to 6.

11. Process according to any one of the preceding claims, characterized in that the adsorption is performed at a temperature of 0 to 60 °C.

12. Decolorized product obtained according to the process as defined in any one of the preceding claims.

13. Product according to Claim 12, characterized in that it is a protein product or peptide product derived from blood.